# EUROPEAN PATENT APPLICATION

(11) **EP 1 301 023 A1**
(43) Date of publication of application: **09.04.2003**
(21) Application number: 02356178.0
(22) Date of filing: 20.09.2002
(51) Int. Cl.: H04N 1/21, H04N 1/32, H04N 1/00

(54) **Automatic process for enriching a digital image**

(30) Priority: 04.10.2001 FR 0112764
(71) Applicant: EASTMAN KODAK COMPANY, Rochester, New York 14650 (US)
(72) Inventor: Vau, Jean-Marie, c/o Kodak Industrie, 71102 Chalon sur Saone Cedex (FR); Franchini, Thibault, Jean-Baptiste, 75017 Paris (FR)
(74) Representative: Parent, Yves

(57) **Abstract**

The invention relates to the multimedia domain of processing digital data coming from various digital sources. The present invention relates more specifically to a process for automatically associating other data to image recording.

The purpose of the present invention is to provide a process enabling a user, based on digital data (30), (40), (60) coming from various sources, to make a relevant association of all these digital data to enhance a digital image (10), (20), taking into account a set of contextual parameters.

Applications of the present invention are embodied in terminals whether portable or not, like for example digital platforms comprising audio players.

## Description

The present invention relates to the multimedia domain of processing digital data coming from various sources of digital data. Digital images and associated image data are generally recorded by the user of a still or video camera. The present invention relates more specifically to a process for automatically associating other digital data to a digitized image recording. The other data, associated with the image data, for example are music or the user's psychological state at the moment when the user makes the image recording. The user's psychological state characterizes one of the elements of the user's personality.

Many electronic devices can associate musical content with fixed or animated images. These portable devices generally integrate for example MP3 players, the new standardized compression format for audio data. Such formats enable significant gains of storage space on units with limited storage capacity, practically without altering the sound. Such is the case for example with the Kodak MC3 digital camera that integrates an MP3 player, with a common RAM for storing for example digital images and songs. This type of unit can be used autonomously and maintain a link with a computer to transfer, to this computer, image and sound files. With these units, generally terminals (portable or not), digital data exchanges (images, sounds) can thus be valorized and enhanced. Users of these digital units expect more than a simple exchange of image even enhanced with music. Available means enable image digital data to be valorized and made unique by adding for example sounds, words, and various special effects. In this way exchanges between users are made more interactive. But it is very difficult to associate for example automatically and in real time, audio digital data (music) to image digital data or to image digital data and time data, by possibly adding data linked to the user's psychological state; all this digital data being in addition linked to a particular context where it is useful to associate them in relation to the user's specific needs or preferences. This association is made complex, despite existing methods, because of differences between individual preferences and user's psychological states (feelings, emotional state, etc.). Users wish to exploit the possibilities offered to combine all the digital data coming from various sources in a unique way. Means enable musical content to be associated with an image; but this association does not in general completely satisfy users' exact expectations in terms for example of the musical harmony or melody that the user wishes to associate with the image or the set of images to be enhanced.

The purpose of the present invention is to provide a process enabling a user, based on digital data coming from various sources, to make a relevant association (adapted to the user's personality) of all these digital data to enhance a digital image, taking account of a set of contextual parameters that are user-specific or more generic.

The present invention is used in a hardware environment equipped for example with units or terminals (portable or not) such as personal computers (PC), PDAs (Personal Digital Assistant), cameras or digital cameras by integrating with these units players for example of the MP3 type. These players enable the use of the corresponding MP3 type sound files. In other words, image-sound convergence platforms are used in the same device.

More precisely, in the environment mentioned above, the purpose of the present invention is to provide for the automatic processing of digital data specific to a user based on: 1) at least one image file stored in a terminal and containing at least one digital photo or video image made or recorded by the user and called the source image, 2) at least one sound file stored in the terminal or accessible from said terminal and containing at least one digital musical work selected by the user; and this process is characterized in that it enables the recording of the contextual parameters of the image characterizing each source image, the recording of the contextual parameters of the sound characterizing each musical work, and the association in real time of the musical work to the source image corresponding with it according to the recorded contextual parameters of said source image and said musical work, so as to enhance the contents of the source image to obtain a first enhanced image of the source image.

Further, the process of the invention enables the recording in the terminal of at least one digital file of the contextual parameters of the psychological state characterizing one psychological state of the user at the moment of recording the source image, and the association in real time of the psychological state with the first enhanced image corresponding to it, according to the recorded contextual parameters of the source image, the musical work and the psychological state to make unique the psychological state of the user in the first enhanced image, to obtain a second enhanced image of the source image.

The process of the invention also enables, based on at least one digital file of generic events data not specific to the user and accessible from the terminal, and according to the contextual parameters of said generic events data, the association in real time of the first or second image enhanced with the generic events data, to obtain a third enhanced image of the source image.

Other characteristics and advantages of the invention will appear on reading the following description, with reference to the drawings of the various figures.

Figure 1 represents a diagram of a unit enabling the implementation of the process of the invention based on the capture of digital data.

Figure 2 represents a diagram of an overall embodiment of the management of various digital data enabling the implementation of the process of the invention.

Figure 3 represents a diagram of a preferred embodiment of Figure 2.

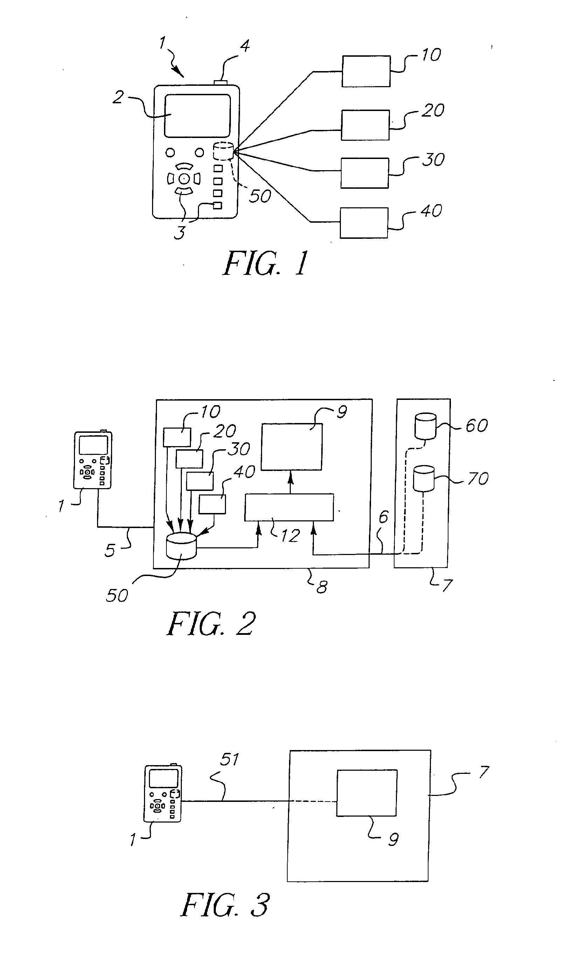

The essential characteristic of the process of the invention is to enable the automatic association of digital music to at least one source digital image in a relevant way, i.e. in a given context proper to a user. The process of the invention enables this association to be made in real time, in a terminal, whether portable or not, either at the moment of recording or capture of the images on a portable platform 1, or during the downloading of these images into the photo album of a PC or a photographic kiosk 8 for example. Figure 1 represents a unit or portable platform 1 enabling the implementation of the process of the invention based on the capture or recording by the user of digital data. This unit 1 is for example a multipurpose digital camera enabling the loading of sound or audio files, with built-in speaker, equipped with a viewing screen 2, a headphones socket 4 and control buttons 3.

According to a preferred embodiment, the process according to the invention is implemented using digital data processing algorithms that are integrated into portable digital units; the recording unit can also be for example a digital camera equipped with an MP3 player. MP3 players enable song sound files to be read for example. These files are for example recorded on the memory card of the digital camera. Integration of the audio player into the camera favors implementation of the process according to the invention. According to the environment represented by Figure 1, a first embodiment of the process according to the invention can be implemented easily. The user visits for example a given country, equipped with a portable digital platform 1 for recording images (photo, video) and enabling the convergence of several digital modules interacting together. The digital modules enable the management and storage of digital files or databases coming from different sources (e.g. images, sounds, or emotions). Contextual parameters are associated with each of these digital data sets. Such contextual parameters are user specific. In other words, for the same source image recorded at the same moment by two different people, the same sound or emotion parameters may not be found. All the digital data and contextual parameters associated with said digital data, images, sounds, psychological or emotional states respectively, generates a set of photographic image files 10, video images 20, sounds 30, psychological states 40 that thus form a database 50 proper or specific to the user. The platform combines for example a digital camera and an audio player. The digital platform is for example a Kodak MC3 digital camera. During the voyage taking them to the visited country or during their stay in the visited country, users have listened to a set of pieces of music or musical works. These musical works are recorded for example in a set of audio type MP3 files as electronic data. For information, the memory card of the Kodak MC3 camera has a capacity of 16 MB (megabytes) and enables the easy storage of pieces of music, for example six or seven musical titles as sound files in MP3 format. But in another embodiment, audio files are other audio compression formats more elaborate than MP3 format (higher compression rates). The platform or digital camera equipped with an audio player enables the storage of a musical context linked to the voyage in an internal memory of said platform. The musical context can be for example a set of data or parameters characterizing the music and the context; these parameters, which will be called contextual parameters, will enhance the respective contents of the sound files. Examples of contextual parameters specific to musical works are represented in Table 1. Generally these are contextual parameters comprising the time characteristics associated with characteristics of the musical work.

**Table 1:**

| Musical Context | | |
|---|---|---|
| Sound filename | Composer / singer | Date / event time |
| Diamonds are a girl's best friend | Marilyn Monroe | June 17, 2001 - 16h.43min |
| Reine de la nuit | Mozart | June 17, 2001 - 16h.46min |
| First Piano Concerto | Rachmaninov | June 17, 2001 - 16h.55min |
| Diamonds are a girl's best friend | Marilyn Monroe | June 17, 2001 - 17h.30min |
| Diamonds are a girl's best friend | Marilyn Monroe | June 17, 2001 - 17h.33min |
| Reine de la nuit | Mozart | June 17, 2001 - 17h.40min |

During their voyage, users take shots with the unit 1 equipped with an audio player. The unit 1 is for example a multipurpose digital camera. The shots are recorded and stored in memory in the unit 1 as digital image files. These images are recorded at moments when the user is not listening to music, or at moments when the user is simultaneously listening to music. The process of the invention enables the storage in memory of an image context linked to the voyage in the unit 1. The image context is for example a set of data or contextual parameters characterizing said context; said contextual parameters are linked to each of the recorded source images. Such images can be photographic (still images) or video images (animated images or clips). An example of contextual parameters specific to images is represented in Tables 2 and 3. Generally they are image parameters comprising, apart from image identification, a pair of time and geolocalization characteristics. Geolocalization characteristics called metadata are easily available using GPS (Global Positioning System) type services for example. The advantage of using the characteristic of distinguishing the position or place (geolocalization) where the user is recording a source image, is that the integration of this geolocalization characteristic enables for example sound and image to be associated more rationally. Such automatic association is achieved by using an algorithm whose mathematical model enables links to be created between the sound and image contextual parameters, for example a link between the place of recording the image and the type of music of said place; for example the mandolin is associated with Sicily, the accordion with France, etc. Other association rules can be selected.

**Table 2:**

| Image Context | | |
|---|---|---|
| Image filename | Geolocalization (event place); metadata | Date / event time |
| Image 01 | X0, Y0 Geodata | June 17, 2001 - 16h.00min |
| Image 02 | X0, Y0 Geodata | June 17, 2001 - 16h.01min |
| Image 03 | X0, Y0 Geodata | June 17, 2001 - 16h.02min |
| Image 04 | X1, Y1 Geodata | June 17, 2001- 17h.00min |
| Image 05 | X1, Y1 Geodata | June 17, 2001 - 17h.02min |

**Table 3:**

| Video Context | | |
|---|---|---|
| Video filename | Geolocalization (event place); metadata | Date / event time |
| Clip 01 | X0, Y0 Geodata | June 17, 2001 - 16h.10min |
| Clip 02 | X0, Y0 Geodata | June 17, 2001 - 16h.15min |
| Clip 03 | X0, Y0 Geodata | June 17, 2001 - 16h.17min |
| Clip 04 | X1, Y1 Geodata | June 17, 2001 - 17h.05min |
| Clip 05 | X1, Y1 Geodata | June 17, 2001 - 17h.06min |

The process of the invention enables the automatic memorizing or recording of these specific contextual parameters associated with sounds or with images. The process of the invention enables the automatic processing of sound and image digital data characterized by their specific contextual parameters described in Tables 1, 2 and 3 respectively. The process of the invention also enables a musical work listened to at the moment of recording a source image or set of source images to be associated with said image or said set of images. Such automatic association is done by using a simple algorithm whose mathematical model uses links between the sound and image contextual parameters, e.g. link by the frequency of events or link by the event date-time, or link by the event place. According to other embodiments, the process of the invention can be implemented by using other digital platforms, integrating for example camera and telephone modules with MP3 type audio players or hybrid AgX-digital cameras with built-in MP3 type audio players.

The process of the invention in a preferred embodiment enables adding to the music-enhanced image, a psychological context, for example emotional, that takes into account the user's psychological state when he recorded a source image. Contextual parameters of the psychological state characterize the user's psychological state at the moment of recording the source image, e.g. happy or sad, tense or relaxed, warm or cool. An example of contextual parameters specific to the emotional state is described in Table 4.

**Table 4:**

| Psychological Context | | |
|---|---|---|
| Psychological state | Geolocalization (event place); metadata | Date / event time |
| Happy | X0, Y0 Geodata | June 17, 2001- 16h.00min |
| Happy | X0, Y0 Geodata | June 17, 2001 - 16h.01min |
| Happy | X0, Y0 Geodata | June 17, 2001- 16h.02min |
| Sad | X1, Y1 Geodata | June 17, 2001- 17h.00min |
| Sad | X1, Y1 Geodata | June 17, 2001- 17h.02min |

In a variation of these preferred embodiments, the process of the invention also enables animation techniques, know to those skilled in the art, to be integrated, such as the Oxygene technology described in the French Patent Application 2 798 803. This is to modify or transform, in addition by using special effects, the digital data (image, sound) that are to be associated by the process of the present invention

In the environment represented by Figure 2 of another embodiment of the process of the invention, the available musical content can be considerably enhanced if the user has, for example in a PC type terminal 8, a larger panel of digital data and context files than in the portable platform 1. For example with the PC 8 connected to the platform 1 using link 5, the user has a larger quantity of digital data storage 50, which provides him with a greater choice of digital data, especially sounds and images. However the user can also use codification of emotions or emotional states coming from standards known to those skilled in the art, like for example Human ML (version of the XML standard) or Affective Tagging, to further enhance his choice of digital data. The PC 8 recovers the database 50 of the portable platform 1 via the link 5. In this embodiment, the user can thus manage an album of digital images 9 on the PC. The album 9 contains the enhanced images (sounds, emotional states) of the source image. The user can if he desires produce this album on a CD or DVD type support. The storage capacity of the PC 8 enables the process of the invention to be used by referring for example to older contexts that could not be recorded on a lower capacity portable platform 1. The algorithm 12 of the process of the invention enables these old contexts to be associated with the more recent contexts linked to the more recent images. The algorithm 12 enables for example old music to be associated with a recent image by referring to said old music previously associated with an older image. The older image having been for example recorded in a place close to or identical to that of the recent image. The link between these old and new contexts is programmed by the rules of association defined in the algorithm. The link can be made for example by the identity or consistency of characteristics of image contextual parameters: the same place, the same time of year (summer), etc. The association between these contextual parameters depends on the algorithm that enables consistency between the various contexts to be obtained. The process of the invention in this preferred embodiment, where it is used for example with a PC, enables digital data to be processed to establish an association between contextual parameters of old images enhanced with other digital data (sounds, emotional states) and previously memorized with more recently memorized images, to obtain consistency of contexts between old enhanced images and new enhanced images in real time. The process of the invention enables this association to be made automatically and in real time when new images recently recorded with a digital camera are downloaded to the PC, using for example a USB interface between the camera and the PC. The process of the invention can be implemented according to Figure 2 by connecting, according to the link 6 for example, to an online service 7. The user can connect via Internet, for example to a kiosk providing images; he can also connect via Internet to any online paying or not paying service whatever. The online service 7 enables adding for example much richer sound content to the image by using a database 60. For example the forgotten musical context of a given period can be found; this forgotten musical context is automatically associated by the algorithm 12 to the source image, according to various contextual parameters previously recorded by the user. For example a source image recorded in Paris is associated with a forgotten old musical context, linked to the place of recording said image: "Paris s'éveille" (song dating from several decades before the recording of the image). In this embodiment, the process of the invention thus enables the image to be considerably enhanced with additional audio digital data 60. The process of the invention also enables the integration for example of codification of emotions or emotional states according to standards like Human ML or Affective Tagging.

According to another variation of this embodiment, the source image can be enhanced with additional data. The embodiments described above enable the source image to be enhanced with personal contexts parameterized by the user. Personal contexts are unique because they are specific to said user. For example on a given platform, of unit 1 type, the user listens to a series of pieces of music that themselves create stimuli and thus synaptic connections in the brain of said user. The associated emotional context is all the more loaded as these audio stimuli activate the user's synapses. But these contexts remain personal, i.e. specific to the user and unique for said user. The user is subject, at a given moment, in a given place, to many other stimuli no longer linked to a personal context, but to a global context linked to the personal context especially by time or geographic links. The global context is based on generic information producing events: sporting, cultural, political, cinematograph, advertising, etc. This set of generic events data, which corresponds to events having taken place for example during the year, contributes to enhancing the user's stimulus of the moment. The global context can be taken into account by the user to further enhance the source image already enhanced by the personal context. This is in order to make up a personal photo album 9. The personal album 9 can thus be formed of source images enhanced by personal audio and psychological contexts, but also by the contextual parameters of generic data recorded in the digital files of the personal album 9. The algorithm of the process of the invention enables the source image already enhanced by personal data inherent to the user to be enhanced in real time with additional generic data coming for example from the database 70 accessible from the PC 8 via Internet. The database 70 contains for example files of generic information data linked to the news concerning a given period (history, culture, sport, cinema, etc.).

According to an embodiment represented in Figure 3, the process of the invention also enables the user to directly access from the portable platform 1 an online album 9; this is instead of accessing a PC or a kiosk 8. The portable platform 1 enabling the implementation of the process of the invention is for example a digital camera that can be connected to an online service 7, via a wireless link 51, on Internet. The association of the various contexts with an image recorded by the platform 1 thus operates at album level and on the place of recording said image.

The process of the invention also enables the integration of animation techniques known to those skilled in the art, such as Oxygene technology; this is to create for example a set of video clips associated with the source images enhanced by their personal and global contexts.

The process of the invention also enables a message display to be included in the enhanced image indicating for example to the user that he has used works protected under copyright, and that he must comply with this copyright.

The process of the invention is not restricted to the described embodiments. It can be implemented in other units to which are coupled or integrated audio players, like for example a hybrid AgX-digital camera, a mobile phone with MP3 player.

## Claims

1. A process for automatically processing digital data specific to a user which, based on at least one image file (10), (20) stored in a terminal (1), (8) and containing at least one digital source photo or video image prerecorded by the user, based on at least one sound file (30, 60) stored in the terminal or accessible from said terminal and containing at least one digital musical work selected by the user, is **characterized in that** it enables the recording of the contextual parameters of the image characterizing each source image, the recording of the contextual parameters of the sound characterizing each musical work, and the association in real time of the musical work to the source image corresponding with it according to the recorded contextual parameters of said source image and said musical work, so as to enhance the contents of the source image to obtain a first enhanced image of said source image.

2. The process according to Claim 1 enabling the recording in the terminal of at least one digital file (40) of the contextual parameters of the psychological state characterizing one psychological state of the user at the moment of recording the source image, and the association in real time of the psychological state with the first enhanced image corresponding to it, according to the recorded contextual parameters of the source image, the musical work and the psychological state to make unique the psychological state of the user in the first enhanced image, to obtain a second enhanced image of the source image.

3. The process according to Claims 1 or 2 that, based on at least one digital file of generic events data not specific to the user and accessible from the terminal, is **characterized in that** in addition according to the contextual parameters of said generic events data, it enables the association in real time of the first or second image enhanced with the generic events data, to obtain a third enhanced image of the source image.

4. The process according to Claim 3 wherein the contextual parameters of the generic events data comprise time and geolocalization characteristics.

5. The process according to any one of Claims 1 to 4 enabling the generation of at least one special effect to transform the digital musical work, or digital image, or both at the same time.

6. The process according to Claim 1 wherein each of the specific contextual parameters of the musical work comprises time characteristics associated with the identification characteristics of the musical work.

7. The process according to Claim 6 wherein the time characteristic is the moment characterizing the start of musical listening by the user.

8. The process according to Claim 1 wherein each of the contextual parameters of the image comprises a pair of time and geolocalization characteristics associated with the identification characteristics of the image.

9. The process according to Claim 8 wherein the time characteristic is the moment characterizing the start of recording the photo image or video clip, and wherein the geolocalization characteristic is the place where the photo image or video clip is recorded.

10. The process according to Claim 2 wherein each of the contextual parameters of the psychological state comprises a pair of time and geolocalization characteristics associated with the characteristics of the psychological state.

11. The process according to Claim 10 wherein the time characteristic corresponds approximately to that of the associated source image and the geolocalization characteristic is the place where the photo image or video clip of the source image is recorded.

12. The process according to Claim 1, wherein the format of recording the sound file is a standardized format of the MP3 type.
